# EUROPÄISCHE PATENTSCHRIFT

(11) **EP 1 458 999 B1**
(45) Veröffentlichungstag und Bekanntmachung des Hinweises auf die Patenterteilung: **13.05.2009**
(21) Anmeldenummer: 02754284.4
(22) Anmeldetag: 28.06.2002
(51) Int. Cl.: F16K 31/06, F02M 25/08

(54) **ELEKTROMAGNETISCHES TANKENTLÜFTUNGSVENTIL**
ELECTROMAGNETIC TANK PURGING VALVE
SOUPAPE ELECTROMAGNETIQUE DE DEGAZAGE D'UN RESERVOIR

(30) Priorität: 18.12.2001 DE 10161995
(43) Veröffentlichungstag der Anmeldung: 22.09.2004
(73) Patentinhaber: ROBERT BOSCH GMBH, 70442 Stuttgart (DE)
(72) Erfinder: KRIMMER, Erwin, 73655 Pluederhausen (DE); SCHULZ, Wolfgang, 74321 Bietigheim-Bissingen (DE); MEISIEK, Achim, 73635 Rudersberg (DE)
(86) Internationale Anmeldenummer: PCT/DE2002/002364
(87) Internationale Veröffentlichungsnummer: WO 2003/052307

(56) Entgegenhaltungen:
- WO-A-01/90611
- DE-A- 19 901 090
- DE-A- 19 947 848
- GB-A- 1 122 316
- PATENT ABSTRACTS OF JAPAN vol. 2000, no. 14, 5. März 2001 (2001-03-05) -& JP 2000 320714 A (AISAN IND CO LTD), 24. November 2000 (2000-11-24)

## Beschreibung

### Stand der Technik

Die Erfindung geht aus von einem elektromagnetischen Tankentlüftungsventil zur Tankentlüftung bei Kraftfahrzeugen, mit wenigstens einer einen Dichtsitz bildenden Ventilöffnung und einem zur Freigabe und zum Verschließen des Dichtsitzes mit diesem zusammenwirkenden, durch mindestens ein Federelement belasteten und von einem Elektromagneten betätigten Ventilglied nach dem Oberbegriff von Anspruch 1.

Ein solches Tankentlüftungsventil ist aus der WO-A-0190611 bekannt.

Ein Tankentlüftungsventil ist auch aus der DE 199 01 090 A1 bekannt und dient dort als Entlüftungsventil zum dosierten Zumischen von aus dem Brennstofftank einer Brennkraftmaschine verflüchtigtem Brennstoff in ein Ansaugrohr oder direkt in einen Zylinder der Brennkraftmaschine.

### Vorteile der Erfindung

Weil das Ventilglied in der Nullage des weiteren Federelements vom Dichtsitz beabstandet ist, übt dieses Federelement auf das Ventilglied Kräfte, beispielsweise Zug- oder Druckkräfte aus, wenn sich das Ventilglied ausgehend von der Nullage auf den Dichtsitz zu bewegt. Diese Kräfte versuchen, das Ventilglied in die Nullage zurückzustellen und sind somit den auf das Ventilglied wirkenden Schließkräften entgegen gerichtet. Infolgedessen wird der mit störenden Geräuschen und Verschleiß verbundene Aufprall des Ventilglieds auf dem Dichtsitz gedämpft. Folglich resultieren die erfindungsgemäßen Maßnahmen in einer deutlichen Reduzierung der Betriebsgeräusche des Magnetventils, was insbesondere beim Einsatz in Kraftfahrzeugen im Hinblick auf die heutigen Komfortansprüche von Vorteil ist.

Gemäß der Erfindung weist das als Federelement wirkende Gummiformteil einen Abschnitt auf, welcher nach radial außen ausgebaucht ist. Die elastische Verformung findet dann hauptsächlich in dem ausgebauchten Abschnitt statt, welcher bei axialen Bewegungen auf Biegung belastet wird. Eine solche radiale Ausbauchung bietet ähnlich einem Faltenbalg in axialer Richtung eine relativ große-Materialreserve, weshalb ein derart ausgebildetes Gummiformteil in vorteilhafter Weise auch für Magnetventile mit größeren Ventilhüben eingesetzt werden kann.

Gemäß einer bevorzugten Ausführungsform der Erfindung handelt es sich bei dem Magnetventil um ein stromlos geschlossenes und bestromt geöffnetes Ventil, wobei das eine Federelement das Ventilglied in eine den Dichtsitz verschließende Position drängt. Dann sind bei einer Auslenkung des weiteren Federelements aus der Nullage dessen auf das Ventilglied wirkende Kräfte den Schließkräften des einen Federelements entgegen gerichtet aber kleiner als diese, um ein dichtes Schließen des Magnetventils zu gewährleisten.

In bevorzugter Weise wird das weitere Federelement durch ein hohles, rotationssymmetrisches und zumindest in Axialrichtung elastisches und in dieser Richtung belastetes Gummiformteil gebildet, welches das eine Federelement radial umschließt. Gummi weist bekanntermaßen Federeigenschaften verbunden mit einer für den vorliegenden Einsatzzweck vorteilhaft hohen Materialdämpfung auf. Außerdem sind aus Gummi kostengünstig Formteile mit den gewünschten Federeigenschaften herstellbar. Weil das Gummiformteil das beispielsweise durch eine Schraubenfeder gebildete eine Federelement umschließt, ergibt sich darüber hinaus eine kompakte Bauweise des Magnetventils.

Gemäß einer weiteren Ausführungsform ist das Gummiformteil hohlzylindrisch ausgebildet und weist in einem zwischen dem Anker und dem Magnetkern gelegenen Bereich eine geringere Wandstärke auf als in anderen Bereichen. Dieser dünnwandigere Bereich bildet dann hauptsächlich den elastischen Verformungsbereich der Gummifeder.

### Zeichnungen

Ausführungsbeispiele der Erfindung sind in der Zeichnung dargestellt und in der nachfolgenden Beschreibung näher erläutert. In den Figuren zeigt :
- Fig.1: einen Längsschnitt durch ein stark schematisiert dargestelltes Tank- entlüftungsventil gemäß einer bevorzugten Ausführungsform der Erfin- dung mit einem von einer Schraubenfeder belasteten Ventilglied;
- Fig.2: den Längsschnitt von Fig.1 ohne Schraubenfeder;
- Fig.3: einen Längsschnitt einer weiteren Ausführungsform des Magnetventils gemäß der Erfindung mit einem von einer Schraubenfeder belasteten Ventilglied;
- Fig.4: den Längsschnitt von Fig.3 ohne Schraubenfeder.

### Beschreibung der Ausführungsbeispiele

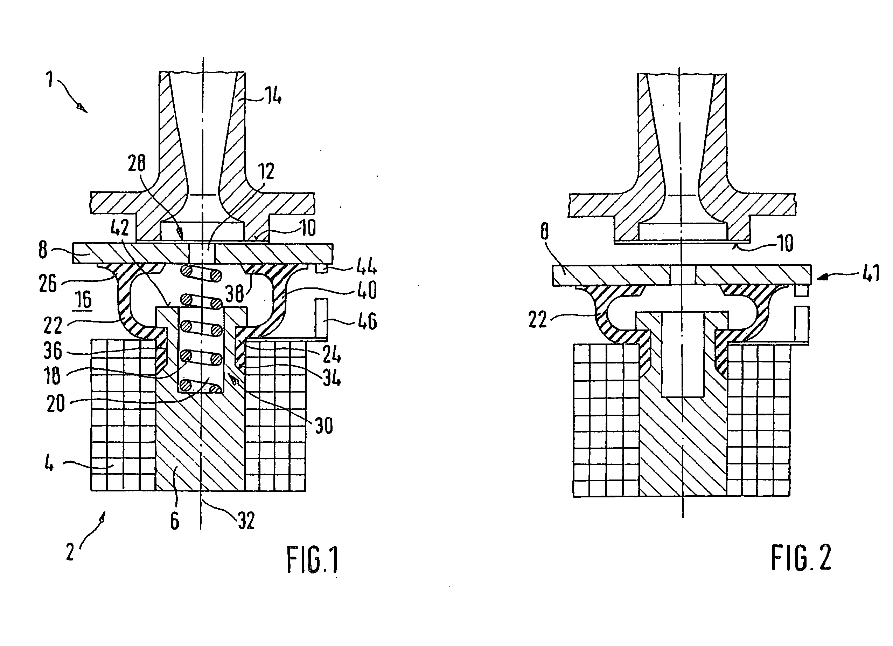

Ein in Fig.1 im Längsschnitt dargestelltes Tankentlüftungsventil 1 als Ausführungsbeispiel für ein beliebiges Magnetventil dient zum dosierten Zumischen von aus einem Brennstofftank einer gemischverdichtenden, fremdgezündeten Brennkraftmaschine verflüchtigtem Brennstoff in die Brennkraftmaschine, z.B. in ein Ansaugrohr oder bei einer Benzindirekteinspritzung direkt in einen Zylinder der Brennkraftmaschine und ist Teil eines nicht näher dargestellten Brennstoffverdunstungs-Rückhaltesystems der Brennkraftmaschine. Ein Tankentlüftungsventil und dessen Funktion geht beispielsweise aus der DE 40 23 044 A1 sowie aus der DE 195 16 545 A1 hervor.

Von dem Tankentlüftungsventil 1 ist aus Maßstabsgründen lediglich ein Elektromagnet 2 mit einem von einer Erregerspule 4 umschlossenen Magnetkern 6, ein das Ventilglied bildender Anker 8 sowie ein Dichtsitz 10 dargestellt. Der Anker ist vorzugsweise als Ankerplatte 8 mit einer mittigen Durchgangsöffnung 12 ausgebildet. Die Ankerplatte 8 liegt einer den Dichtsitz 10 aufweisenden Ventilöffnung gegenüber, welche in einem Abströmstutzen 14 ausgebildet ist. Der Abströmstutzen 14 steht mit einem Ansaugrohr einer Brennkraftmaschine in Verbindung, wobei die Durchgangsöffnung 12 als Druckausgleich zwischen dem Ansaugrohr und der Atmosphäre dient. Der Raum 16 zwischen dem Elektromagneten 2 und einem nicht dargestellten Ventilgehäuse steht mit einem Entlüftungsstutzen eines Brennstofftanks oder mit einem diesem nachgeschalteten, mit Aktivkohle gefüllten Speicher für den verflüchtigten Brennstoff in Verbindung.

Bei dem Tankentlüftungsventil 1 handelt es sich vorzugsweise um ein stromlos geschlossenes Magnetventil, d.h. im stromlosen Zustand der Erregerspule 4 wirken auf die Ankerplatte 8 keine Magnetkräfte, welche durch die Wirkung eines Federelements 18 gegen den Dichtsitz 10 gedrängt ist und diesen dichtend verschließt, so daß kein verflüchtigter Brennstoff in den Abströmstutzen 14 gelangen kann. Das Federelement wird vorzugsweise durch eine sich mit ihrem einen Ende in einem Sackloch 20 des Magnetkerns 6 und mit ihrem anderen Ende an der Ankerplatte 8 abstützenden Schraubenfeder 18 gebildet. Darüber hinaus ist ein weiteres Federelement 22 vorgesehen, welches auf die Ankerplatte 8 in Betätigungsrichtung wirkt und beispielsweise durch ein elastisches Gummiformteil gebildet wird, welches mit seinem einen Ende 24 am Magnetkern 6 und mit seinem anderen Ende 26 an der Ankerplatte 8 festgelegt ist. Das Gummiformteil 22 ist beispielsweise hohl und rotationssymmetrisch, mit endseitigen Öffnungen 28, 30, und umschließt die Schraubenfeder 18 radial, wodurch es in funktionaler Hinsicht parallel zu dieser geschaltet ist. Das Gummiformteil 22 dient gleichzeitig auch als Membran für den Druckausgleich und dichtet den Raum 16 gegenüber der Durchgangsöffnung 12 und dem Abströmstutzen 14 ab. Die Erregerspule 4, der Magnetkern 6, die Schraubenfeder 18, das Gummiformteil 22, die Ankerplatte 8 sowie der Dichtsitz 10 sind koaxial zu einer Ventillängsachse 32 angeordnet.

Das Gummiformteil 22 ist mit seiner einen endseitigen Öffnung 30 auf den Magnetkern 6 radial aufgesetzt und an dessen äußerer Umfangsfläche festgelegt. Dies kann beispielsweise dadurch realisiert sein, daß die eine endseitige Öffnung 30 des Gummiformteils 22 mit einem nach radial innen ragenden Ringvorsprung 34 versehen ist, welcher in eine hierzu komplimentäre Ringnut 36 am äußeren Umfang des Magnetkerns 6 formschlüssig eingreift. Alternativ oder zusätzlich könnte dieses Ende des Gummiformteils 22 auch auf der Seite des Dichtsitzes 10 abgestützt sein.

Am Rand der anderen endseitigen Öffnung 28 des Gummiformteils 22 ist ein zur Ankerplatte 8 paralleler und an dieser festgelegter Ringabschnitt 38 vorhanden, so daß die Ankerplatte 8 am Magnetkern 6 mittels des elastischen Gummiformteils 22 federnd befestigt ist. Ein mittlerer Abschnitt 40 der Wandung des Gummiformteils 22 ist vorzugsweise nach radial außen ausgebaucht, so daß die Ankerplatte 8 insbesondere axiale Bewegungen in Richtung der Ventillängsachse 32 ausführen kann, um den Dichtsitz 10 zu verschließen bzw. um ihn freizugeben.

In Fig. 2 ist das Tankentlüftungsventil 1 ebenfalls im stromlosen Zustand dargestellt, jedoch ohne die Schraubenfeder 18. Der Grund hierfür ist, daß - unter Vernachlässigung der Gewichtskraft der Ankerplatte 8 - das Gummiformteil 22 ohne die Schraubenfeder 18 und ohne Magnetkräfte unbelastet ist und demzufolge seine kraftfreie Nullage 41 dargestellt werden kann. In dieser unbelasteten Nullage 41 des Gummiformteils 22 ist die Ankerplatte 8 vom Dichtsitz 10 beabstandet. Es ist offensichtlich, daß zumindest der mittlere, ausgebauchte Abschnitt 40 der Wandung des Gummiformteils 22 bei Auslenkungen aus der Nullage 41 elastisch gebogen bzw. gedehnt oder gestaucht wird und demzufolge axiale Kräfte auf die mit ihm in Verbindung stehende Ankerplatte 8 ausüben kann. Beispielsweise wird die Wandung des Gummiformteils 22 zum Dichtsitz hin gebogen bzw. gedehnt, wenn die Ankerplatte 8 durch die Druckkraft der Schraubenfeder 18 in die in Fig.1 gezeigte Schließstellung gebracht ist. Hierdurch übt das Gummiformteil 22 auf die Ankerplatte 8 Zugkräfte aus, welche diese vom Dichtsitz 10 weg, in die Nullage 41 zurückzustellen versuchen. Es ist jedoch klar, daß die stets als Druckkräfte wirkenden Schließkräfte der Schraubenfeder 18 größer sind als die durch das Gummiformteil 22 erzeugten Zugkräfte, da ansonsten kein dichter Verschluß des Dichtsitzes 10 durch die Ankerplatte 8 erfolgen könnte. Die Größe der auf die Ankerplatte wirkenden Federkräfte kann durch entsprechende Wahl der Federparameter auf die jeweils vorliegenden Erfordernisse leicht angepaßt werden.

Wird nun ausgehend von der stromlosen Schließstellung gemäß Fig. 1 die Erregerspule 4 bestromt, so resultiert dies in Magnetkräften, welche entgegen der Druckkräfte der Schraubenfeder 18 wirken und die Ankerplatte 8 vom D ichtsitz 10 abheben. Infolgedessen wird eine Verbindung zwischen dem Speicher mit Aktivkohlefilter und dem Ansaugrohr der Brennkraftmaschine geschaffen. Ein aus Geräuschgründen nicht erwünschter Aufprall der Ankerplatte 8 auf der Stirnfläche 42 des Magnetkerns 6 wird durch an der zum Magnetkern 6 weisenden Seite der Ankerplatte 8 angeordnete Gumminoppen 44 verhindert, die gegen einen am Elektromagneten 2 festgelegten Anschlag 46 anschlagen. Im bestromten Zustand des Elektromagneten 2 hat die Ankerplatte 8 von der Stirnfläche 42 des Magnetkerns 6 dann einen geringen Abstand.

Die zwischen der Anlage am Anschlag 46 und der Anlage am Dichtsitz 10 zurückgelegte Wegstrecke der Ankerplatte 8 bildet daher einen in Fig.1 und Fig.2 aus Anschaulichkeitsgründen stark vergrößert dargestellten Ventilhub des Tankentlüftungsventils 1, wobei die Nullage 41 des Gummiformteils 22 sich zwischen den Grenzen des Ventilhubs befindet, vorzugsweise in etwa mittiger Lage.

Die unmittelbar nach dem Abschalten des Stromes durchlaufene Wegstrecke der Ankerplatte 8 untergliedert sich dann in drei Abschnitte :
Entlang eines ersten, sich vom Anschlag 46 am Elektromagneten 2 (Öffnungsstellung des Tankentlüftungsventils 1) bis zur Nullage 41 des Gummiformteils 22 erstreckenden Abschnitts wird die Ankerplatte 8 durch eine sich aus der Druckkraft der Schraubenfeder 18 und einer hierzu gleichgerichteten Druckkraft des nun gestauchten Gummiformteils 22 zusammensetzende Druckkraft belastet, welche sie vom Anschlag 46 weg drängt. Der zweite Abschnitt wird durch die Nullage 41 des dann unverformten Gummiformteils 22 gebildet, in welcher dieses keine Kraft, die Schraubenfeder 18 aber weiterhin eine zum Dichtsitz 10 hin gerichtete Druckkraft erzeugt. Im Laufe eines dritten Abschnitts, der zwischen der Nullage 41 des Gummiformteils und dem Anschlag der Ankerplatte 8 am Dichtsitz 10 liegt, wirkt weiterhin die Druckkraft der Schraubenfeder 18, jedoch zusätzlich eine hierzu entgegen gerichtete, aus der Biegung und Dehnung des Gummiformteils 22 resultierende Zugkraft. Diese der Schließkraft während des dritten Abschnitts des Schließvorgangs entgegen gerichtete Zugkraft bewirkt eine Dämpfung des Aufpralls der Ankerplatte 8 auf dem Dichtsitz 10, da die Schließkraft der Schraubenfeder 18 in der Endphase des Schließvorgangs um sie vermindert wird.

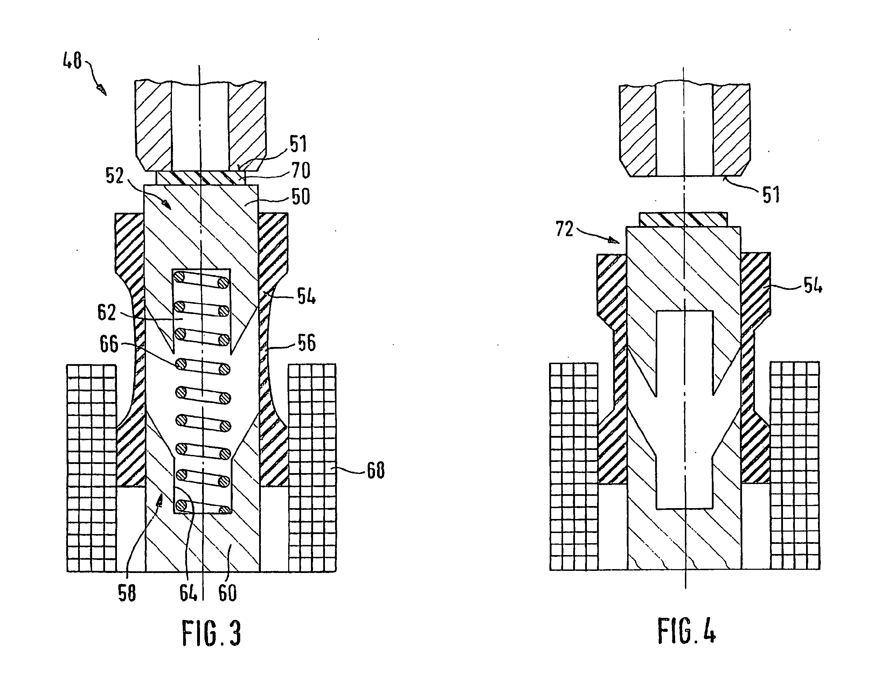

Bei einem zweiten Ausführungsbeispiel eines Tankentlüftungsventils 48 gemäß der Erfindung nach den Fig. 3 und Fig. 4 dient als Ventilglied anstatt einer Ankerplatte ein zylindrischer Ankerzapfen 50, welcher in der zum Dichtsitz 51 weisenden endseitigen Öffnung 52 eines Gummiformteils 54 festgelegt ist. Das Gummiformteil 54 hat die Form einer zylindrischen Hülse mit in einem mittleren Abschnitt 56 reduzierter Wandstärke, um bevorzugt in diesem Bereich eine Dehnung bzw. Stauchung des Gummimaterials zu ermöglichen. Das andere auch als zylindrische Öffnung 58 ausgebildete Ende des Gummiformteils 54 ist axial ein Stück weit über den als zylindrischer Zapfen ausgebildeten und koaxial zum Ankerzapfen 50 angeordneten Magnetkern 60 gezogen und dort festgelegt. Der Ankerzapfen 50 und der Magnetkern 60 sind mit zueinander weisenden, koaxialen Sacklöchern 62, 64 versehen, in welchen je ein Ende einer Schraubenfeder 66 aufgenommen ist. Das magnetkernseitige Ende 58 des Gummiformteils 54 ist dem Magnetkern 60 und einer Erregerspule 68 zwischengeordnet.

Fig. 3 zeigt das Tankentlüftungsventil 48 in seiner stromlosen Schließstellung, in welcher ein am Ankerzapfen 50 stirnseitig angeordnetes Dämpfungs- und Dichtungselement 70 am Dichtsitz 51 anliegt. Die auf den Ankerzapfen 50 wirkende Schließkraft wird wiederum durch die sich am Magnetkern 60 abstützende Schraubenfeder 66 als Druckkraft erzeugt, welche den Ankerzapfen 50 über die in Fig. 4 gezeichnete Nullage 72 des Gummiformteils 54 hinaus gegen den Dichtsitz 51 drängt. Wie aus Fig. 4 hervorgeht, ist auch bei dieser Ausführungsform der Ankerzapfen 50 in der Nullage 72 des Gummiformteils 54 vom Dichtsitz 51 beabstandet, so daß das Gummiformteil 54 bei Auslenkung aus der Nullage 72 in Richtung auf den Dichtsitz 51 Zugkräfte durch Materialdehnung erzeugt, welche den Druckkräften der Schraubenfeder 66 entgegen gerichtet sind. Infolgedessen wird wie bei der vorangehend beschriebenen Ausführungsform der Aufprall des durch den Ankerzapfen 50 gebildeten Ventilglieds auf dem Dichtsitz 51 gedämpft.

## Patentansprüche

1. Elektromagnetisches Tankentlüftungsventil (1; 48) zur Tankentlüftung bei Kraftfahrzeugen, mit wenigstens einer einen Dichtsitz (10; 51) bildenden Ventilöffnung und einem zur Freigabe und zum Verschließen des Dichtsitzes (10; 51) mit diesem zusammenwirkenden, durch mindestens ein Federelement (18; 66) belasteten und von einem Elektromagneten (2; 60, 68) betätigten Ventilglied (8; 50), wobei eine im wesentlichen unbelastete Nullage (41; 72) wenigstens eines weiteren, auf das Ventilglied (8; 50) in Betätigungsrichtung wirkenden Federelements (22; 54) vorhanden ist, in welcher das Ventilglied (8; 50) vom Dichtsitz (10; 51) beabstandet ist, **dadurch gekennzeichnet,**
**daß** das weitere Federelement (22; 54) durch ein hohles, rotationssymmetrisches und zumindest in Axialrichtung elastisches und in dieser Richtung belastetes Gummiformteil (22; 54) gebildet ist, welches das eine Federelement (18; 66) radial umschließt
und **daß** das Gummiformteil (22) einen Abschnitt (40) aufweist, welcher nach radial außen ausgebaucht ist.

2. Tankentlüftungsventil (1; 48) nach Anspruch 1, **dadurch gekennzeichnet, daß** das eine Federelement (18; 66) und das weitere Federelement (22; 54) zueinander parallel geschaltet sind.

3. Tankentlüftungsventil (1; 48) nach Anspruch 1 oder 2, **dadurch gekennzeichnet, daß** der Nullage (41; 72) des weiteren Federelements (22; 54) eine Position des Ventilglieds (8; 50) zwischen den Grenzen des Ventilhubs zugeordnet ist.

4. Tankentlüftungsventil (1; 48) nach Anspruch 3, **dadurch gekennzeichnet, daß** es stromlos geschlossen und bestromt geöffnet ist und daß das eine Federelement (18; 66) das Ventilglied (8; 50) in eine den Dichtsitz (10; 51) verschließende Position drängt.

5. Tankentlüftungsventil (1; 48) nach Anspruch 4, **dadurch gekennzeichnet, daß** bei einer Auslenkung des weiteren Federelements (22; 54) aus der Nullage (41; 72) dessen auf das Ventilglied (8; 50) wirkende Kräfte den Schließkräften des einen Federelements (18; 66) entgegen gerichtet aber kleiner als diese sind.

6. Tankentlüftungsventil (1; 48) nach Anspruch 5, **dadurch gekennzeichnet, daß** es einen Elektromagneten (2; 60, 68) mit einem von einer Erregerspule (4; 68) umschlossenen Magnetkern (6; 60) sowie einen das Ventilglied bildenden Anker (8; 50) umfaßt und der Dichtsitz (10; 51) dem Elektromagneten (2; 60, 68) gegenüber liegt.

7. Tankentlüftungsventil (1; 48) nach Anspruch 6, **dadurch gekennzeichnet, daß** zumindest am Anker (50) elastische Dicht- und/oder Geräuschdämpfungselemente (70) angeordnet sind.

8. Tankentlüftungsventil (1; 48) nach Anspruch 7, **dadurch gekennzeichnet, daß** sich das weitere Federelement (22; 54) auf der Seite des Elektromagneten (2) und/oder auf der Seite des Dichtsitzes (10; 51) abstützt.

9. Tankentlüftungsventil (1;48) nach Anspruch 8, **dadurch gekennzeichnet, daß** der Anker als Ankerplatte (8) ausgebildet ist.

10. Tankentlüftungsventil (1; 48) nach Anspruch 9, **dadurch gekennzeichnet, daß** das Gummiformteil (22) mit einer endseitigen Öffnung (30) auf den Magnetkern (6) aufgesetzt und an dessen äußerer Umfangsfläche festgelegt und am Rand der anderen endseitigen Öffnung (28) ein zur Ankerplatte (8) paralleler und an dieser festgelegter Ringabschnitt (38) vorhanden ist.

11. Tankentlüftungsventil (1; 48) nach Anspruch 8, **dadurch gekennzeichnet, daß** der Anker und der Magnetkern (6) jeweils als zylindrische, in endseitigen Öffnungen (52, 58) des Gummiformteils (54) festgelegte Zapfen (50; 60) ausgebildet sind.

12. Tankentlüftungsventil (1; 48) nach Anspruch 11, **dadurch gekennzeichnet, daß** das Gummiformteil (54) hohlzylindrisch ausgebildet ist und in einem zwischen dem Anker (50) und dem Magnetkern (60) gelegenen Abschnitt (56) eine geringere Wandstärke aufweist als in anderen Bereichen.

## Claims

1. Electromagnetic tank ventilation valve (1; 48) for ventilating tanks in motor vehicles, having at least one valve opening, which forms a sealing seat (10; 51), and a valve member (8; 50) which interacts with the sealing seat (10; 51) in order to release and close the said sealing seat, is loaded by at least one spring element (18; 66) and is operated by an electromagnet (2; 60, 68), with a substantially unloaded zero position (41; 72) of at least one further spring element (22; 54) which acts on the valve member (8; 50) in the operating direction being provided, in which zero position the valve member (8; 50) is at a distance from the sealing seat (10; 51), **characterized in that** the further spring element (22; 54) is formed by a shaped rubber part (22; 54) which is hollow, rotationally symmetrical, elastic at least in the axial direction and loaded in this direction, and radially surrounds the one spring element (18; 66), and **in that** the shaped rubber part (22) has a section (40) which bulges radially outwards.

2. Tank ventilation valve (1; 48) according to Claim 1, **characterized in that** the one spring element (18; 66) and the further spring element (22; 54) are connected parallel to one another.

3. Tank ventilation valve (1; 48) according to Claim 1 or 2, **characterized in that** a position of the valve member (8; 50) between the limits of the valve travel is associated with the zero position (41; 72) of the further spring element (22; 54).

4. Tank ventilation valve (1; 48) according to Claim 3, **characterized in that** it is closed in a de-energized state and open in an energized state, and **in that** the one spring element (18; 66) pushes the valve member (8; 50) into a position which closes the sealing seat (10; 51).

5. Tank ventilation valve (1; 48) according to Claim 4, **characterized in that**, when the further spring element (22; 54) is deflected out of the zero position (41; 72), the forces of the said further spring element which act on the valve member (8; 50) are directed against the closing forces of the one spring element (18; 66), but are lower than these.

6. Tank ventilation valve (1; 48) according to Claim 5, **characterized in that** it comprises an electromagnet (2; 60, 68) with a magnet core (6; 60) which is surrounded by a field coil (4; 68), and an armature (8; 50) which forms the valve member, and the sealing seat (10; 51) is situated opposite the electromagnet (2; 60, 68).

7. Tank ventilation valve (1; 48) according to Claim 6, **characterized in that** elastic sealing and/or noise-damping elements (70) are arranged at least on the armature (50).

8. Tank ventilation valve (1; 48) according to Claim 7, **characterized in that** the further spring element (22; 54) is supported on the side of the electromagnet (2) and/or on the side of the sealing seat (10; 51').

9. Tank ventilation valve (1; 48) according to Claim 8, **characterized in that** the armature is in the form of an armature plate (8).

10. Tank ventilation valve (1; 48) according to Claim 9, **characterized in that** an end-face opening (30) in the shaped rubber part (22) is placed on the magnet core (6) and fixed to its outer peripheral surface, and an annular section (38), which is parallel to the armature plate (8) and is fixed to the said armature plate, is provided at the edge of the other end-face opening (28).

11. Tank ventilation valve (1; 48) according to Claim 8, **characterized in that** the armature and the magnet core (6) are in each case in the form of cylindrical pins (50; 60) which are fixed in end-face openings (52, 58) in the shaped rubber part (54).

12. Tank ventilation valve (1; 48) according to Claim 11, **characterized in that** the shaped rubber part (54) is of hollow-cylindrical form and, in a section (56) which is situated between the armature (50) and the magnet core (60), has a lower wall thickness than in other regions.

## Revendications

1. Soupape électromagnétique de dégazage d'un réservoir (1 ; 48) pour le dégazage de réservoirs de véhicules automobiles, comprenant au moins une ouverture de soupape formant un siège d'étanchéité (10 ; 51) et un organe de soupape (8 ; 50) coopérant avec celle-ci pour libérer et fermer le siège d'étanchéité (10 ; 51), sollicité par au moins un élément de ressort (18 ; 66) et actionné par une électrovanne (2 ; 60, 68), une position d'origine essentiellement non sollicitée (41 ; 72) d'au moins un autre élément de ressort (22 ; 54) agissant dans le sens de l'actionnement sur l'organe de soupape (8 ; 50) étant prévue, dans laquelle l'organe de soupape (8 ; 50) est espacé du siège de soupape (10 ; 51), **caractérisée en ce que** l'autre élément de ressort (22 ; 54) est formé par une pièce moulée en caoutchouc (22 ; 54) creuse, à symétrie de révolution, au moins élastique dans la direction axiale et sollicitée dans cette direction, laquelle entoure radialement le premier élément de ressort (18 ; 66), et **en ce que** la pièce moulée en caoutchouc (22) présente une portion (40) qui est bombée radialement vers l'extérieur.

2. Soupape électromagnétique de dégazage d'un réservoir (1 ; 48) selon la revendication 1, **caractérisée en ce que** le premier élément de ressort (18 ; 66) et l'autre élément de ressort (22 ; 54) sont montés parallèlement l'un à l'autre.

3. Soupape électromagnétique de dégazage d'un réservoir (1 ; 48) selon la revendication 1 ou 2, **caractérisée en ce que** la position zéro (41 ; 72) de l'autre élément de ressort (22 ; 54) est associée à une position de l'organe de soupape (8 ; 50) entre les limites de la course de soupape.

4. Soupape électromagnétique de dégazage d'un réservoir (1 ; 48) selon la revendication 3, **caractérisée en ce qu'**elle est fermée en l'absence de courant et est ouverte lorsqu'elle est parcourue par un courant, et **en ce que** le premier élément de ressort (18 ; 66) pousse l'organe de soupape (8 ; 50) dans une position fermant le siège d'étanchéité (10 ; 51).

5. Soupape électromagnétique de dégazage d'un réservoir (1 ; 48) selon la revendication 4, **caractérisée en ce que** dans le cas d'une déviation de l'autre élément de ressort (22 ; 54) hors de la position zéro (41 ; 72) ses forces agissant sur l'organe de soupape (8 ; 50) sont orientées à l'opposé des forces de fermeture du premier élément de ressort (18 ; 66) mais inférieures à celles-ci.

6. Soupape électromagnétique de dégazage d'un réservoir (1 ; 48) selon la revendication 5, **caractérisée en ce qu'**elle comprend une électrovanne (2 ; 60, 68) avec un noyau magnétique (6 ; 60) entouré d'une bobine excitatrice (4 ; 68) ainsi qu'un induit (8 ; 50) formant l'organe de soupape, et le siège d'étanchéité (10 ; 51) est opposé à l'électrovanne (2 ; 60, 68).

7. Soupape électromagnétique de dégazage d'un réservoir (1 ; 48) selon la revendication 6, **caractérisée en ce qu'**au moins sur l'induit (50) sont disposés des éléments élastiques d'amortissement des bruits et/ou d'étanchéité (70).

8. Soupape électromagnétique de dégazage d'un réservoir (1 ; 48) selon la revendication 7, **caractérisée en ce que** l'autre élément de ressort (22 ; 54) s'appuie du côté de l'électrovanne (2) et/ou du côté du siège d'étanchéité (10 ; 51).

9. Soupape électromagnétique de dégazage d'un réservoir (1 ; 48) selon la revendication 8, **caractérisée en ce que** l'induit est réalisé sous forme de plaque d'induit (8).

10. Soupape électromagnétique de dégazage d'un réservoir (1 ; 48) selon la revendication 9, **caractérisée en ce que** la pièce moulée en caoutchouc (22) est posée avec une ouverture (30) du côté de l'extrémité sur le noyau magnétique (6) et est fixée au niveau de sa surface périphérique extérieure et **en ce qu'**une portion annulaire (38) parallèle à la plaque d'induit (8) et fixée à celle-ci est prévue sur le bord de l'autre ouverture (28) du côté de l'extrémité.

11. Soupape électromagnétique de dégazage d'un réservoir (1 ; 48) selon la revendication 8, **caractérisée en ce que** l'induit et le noyau magnétique (6) sont constitués chacun sous forme de tourillons (50 ; 60) cylindriques, fixés dans des ouvertures (52, 58) du côté de l'extrémité de la partie moulée en caoutchouc (54).

12. Soupape électromagnétique de dégazage d'un réservoir (1 ; 48) selon la revendication 11, **caractérisée en ce que** la pièce moulée en caoutchouc (54) est réalisée sous forme cylindrique creuse et présente, dans une portion (56) placée entre l'induit (50) et le noyau magnétique (60), une plus faible épaisseur de paroi que dans d'autres régions.
